# EUROPEAN PATENT SPECIFICATION

(11) **EP 0 369 976 B1**
(45) Date of publication and mention of the grant of the patent: **13.04.1994**
(21) Application number: 89850399.0
(22) Date of filing: 14.11.1989
(51) Int. Cl.: A01M 1/14

(54) **Insect catcher**
Insektenfalle
Piège à mouches

(30) Priority: 18.11.1988 SE 8804173
(43) Date of publication of application: 23.05.1990
(73) Proprietor: LIM- JOHAN AKTIEBOLAG, S-382 00 Nybro (SE)
(72) Inventor: Johansson, Nils-Vide Ingemar, S-394 77 Kalmar (SE)
(74) Representative: Roth, Ernst Adolf Michael

(56) References cited:
- FR-A- 634 898
- FR-A- 645 117
- FR-A- 948 359
- FR-A- 2 174 804
- US-A- 2 249 718

## Description

The present invention relates to a method of catching insects.

The object of the present invention is to obtain a possibility to catch insects, and in particular indoor insects, such as flies, mosquitoes, wasps, and plant pests, in restaurants, homes, stables, cowhouses, and other spaces.

### Background of the invention

It is previously known insect catching devices based on fixing by means of a glue an insect landing into a carrier, such as a paper strip provided with a resinous glue, which strip is hung in places rich in flies and/or fly attracting places. The strip is stored in a board cover and is drawn out to the formation of a helix for exposing the glue surface for catching flies.

It is further known larger paper sheets provided with a glue and, optionally an attractant, such as euginol, to be hung in cowhouses and stables to catch flies. The paper sheets which are double sided with regard to the glued surface are hereby attached on a rib and are hanging vertically above animals and manure flutes. Reference is hereby made to US-A-2,249,718.

It has, however, turned out that such fly catching devices of the above mentioned types will become covered by dirt and dust and thereby will lose their catching/glueing ability, further they are obstructing activities around them. One will be readily caught therein, they are troublesome to hang up and take down, and with regard to the latter type with large areas, about 0.5 m², they will disturb the ventilation which often is of importance for the well-being of the animals. The larger fly catching devices can even catch small birds which is undesired. It is further not particularly aesthetically suitable to use these types of catchers in restaurants, confectioner's shops, and other similar localities. The catchers as such are not particularly pretty, and it can be directly unappetizing to see a collection of dead or dying flies.

It is further known from FR-A-645,117, and FR-A-634,898 a cord provided with a glue for catching flies. These cords are, however, intended be hung vertically.

However, there is a general demand for eliminating flies and other insects, and the preferably without using any poison, as flies and mosquitoes, in particular, are infection contaminators, or cause more or less painful bites.

### Description of the present invention

It has now surprisingly turned out possible to be able to eliminate the above problems, and even increase the amount of insects caught per time unit by means of the present invention, in which one arranges a cord provided with a glue, horizontally, in a place wherein insects are to be caught.

Further characteristics are evident from the accompanying claims.

By means of the present invention a significant increase of the number of insects caught per time unit is obtained. In tests carried out where the present invention has been compared with a vertically hanging paper sheet provided with the same glue and the same amount of attractant one obtained more than 10 times the amount of flies caught in a third of the area.

The cord used in the present invention can be of any type and material with the exception of such that has not the mechanical strength and/or excretes a repelling agent. Certain plant fibres such as sisal, hemp, repel the house fly. There is suitably used an inert, white polypropylene cord which can be obtained to a fair cost per meter and in suitable dimensions. But a polypropylene reinforced cord of cotton or pure cord of cotton can be used.

It has turned out that a suitable dimension of the cord in non-glue provided condition is 2.5 to 4.0 mm, preferably 3.0 to 3.5 mm. After coating with a glue the diameter will become 3.0 to 5.0 mm, preferably 3.5 to 4.3 mm. The cord diameter 3.2 has, after glue coating a diameter of 4.0 mm which has turned out to be optimal. Suitable glues or adhesives are styrene based adhesives, NR-based adhesives or resin based glues, i.e. such glues/adhesives which are normally used in insect catching devices.

The consistency of the glue should be adopted to the temperature when used, normally 18 to 22^{o}C, an to the air humidity present.

If the glue/adhesive should be sensitive to UV light such as styrene based adhesives might be, they should not be exposed to a direct radiation from the sun. The adhesives might, of course, in such a situation be provided with an UV protecting agent, if this is not hardening.

The cord can also be provided with a suitable attractant, such as euginol, eutanol, ethanol for flies, and other known attractants for other insects, such as for mosquitoes, wasps. The attractant used may not harden the glue/adhesive but rather be a plasticiser.

The cord used is stretched horisontally or is hung or stretched vertically on a suitable level. Thus a high as well as a low placement can be used depending on the type of insect or even the specie within an insect family. The cord is stretched preferably horizontally, in particular in stables, cowhouses and green houses.

In major places the glue coated cord is preferably dispensed from a roll arranged on a supply drum and is drawn underneath a ceiling or along a wall, optionally via one pulley or more, to a collecting drum, whereby a suitable length of new cord little by little can be fed by cranking by hand or by motor. In the latter case the motor can be controlled in different ways, e.g. by a time relay so that a predetermined length of cord per 24 hrs. all as required. When a drum has become full it is thrown away quite simply, and a new drum with a fresh cord is installed. If the drums are treated with a silicon oil the glue will not attach to the drum.

The cord can also be designed in different ways to be adopted to the environment and the surroundings. Thus it can be cut in smaller lengths and be put into flower pots and flower boxes to eliminate plant insects and flies, or be designed with more fantasy such as a rosette on a stick to be placed among plants in a window. In restaurants and confectioners shops a cord can be hidden behind a curtain-rod, if so desired.

By choosing a white colour on the cord and/or the glue such a cord will become any particularly pronounced.

### Example

300 m of a polypropylene cord (split fibre) having a diameter of 3.2 mm were impregnated with euginol in an amount of 2.5 g per 300 m. The cord was then coated with an elastomer based melting glue (styrene based, viscosity: 2800 mPas at 80^{o}C; softening point: 52^{o}C according to the ring-ball method; Hernimelt 8693, Hernia International AB, SE) by dragging the cord through a container containing the glue up to a diameter of 4.0 mm. 0.84 kg of styrene based glue were used.

The impregnation using an attractant can be made in different ways, such as by using a gaseous method, solving the attractant in the glue or spraying onto the cord using an atomized attractant.

### Test 1

22 m of the cord according to the Example above was stretched horizontally in a cowhouse where also a paper sheet provided with the same glue and the same attractant and having the area 0.88 m² was arranged vertically under the same conditions. The area of the cord was 0.28 m²/22 m. Hereby the cord caught 200 flies during 1 minute, while the paper sheet caught 17 flies during the same time period. The cord thus caught about 30 times more flies per area unit during 1 minute than did the paper sheet.

### Test 2

The same cord as produced according to the Example above was stretched horizontally as well as vertically in a cowhouse. Hereby 1 m long cords were hung vertically down from the horizontal cord on each running meter. The amount of vertical cord was thus equal to the length of horizontal cord. The horizontal cord caught 72 flies in 1 minute compared with 30 flies in 1 minute for the vertical cords. The horizontal cord thus caught twice as much flies. Compared with Test 1 above however, the vertical cords caught more flies per time unit and area unit than a paper sheet did.

### Test 3

In a kitchen a cord according to the present invention, the example above, was hung horizontally, as well as a conventional paper strip (5 x 100 cm). While the cord caught 12 flies the paper strip had only caught 1 fly. The glue and the attractant were the same in both cases.

### Test 4

In order to determine the difference between cord with glue and attractant, and cord with glue only, two such different cords were stretched horizontally in a cowhouse under the same conditions. No significant difference in the amount of flies caught could be determined.

The presence of an attractant is thus not necessary for the present invention but the catching ability is substantially related to the cord shape, in particular when it is stretched horizontally.

### Test 5

In a further test a cord according to the present invention was compared with a paper strip both types being arranged horisontally. The length of the cord was 1000 mm and its diameter was 3.2 mm uncoated. The length of the paper strip was 1000 mm as well, and its width was 50 mm. The two catching devices were coated with the same and attractant. The cord and the strip, respectively, were arranged horizontally under the same outer conditions. Each cord and strip was replaced after each 24 hrs. The results are given in the Table below. Fly: Musca domestica.

**TABLE**

| Day | Number of flies caught | |
|---|---|---|
| | Cord | Strip |
| 1 | 12 | 1 |
| 2 | 6 | 0 |
| 3 | 24 | 6 |
| 4 | 18 | 4 |
| 5 | 36 | 8 |
| 6 | 12 | 2 |
| 7 | 66 | 13 |
| 8 | 36 | 7 |
| 9 | 72 | 26 |
| 10 | 111 | 32 |
| 11 | 96 | 31 |
| 12 | 42 | 8 |
| 13 | 21 | 6 |
| 14 | 118 | 29 |
| 15 | 42 | 7 |

## Claims

1. Method for catching insects using a glue trap, wherein one applies a cord coated with glue in a place in which insects are to be caught, **characterized** in that one applies the cord horizontally.

2. Method according to claim 1, **characterized** in that one arranges the cord coated with glue in such a way that one draws forward fresh cord from a dispenser little by little.

3. Method according to claim 1 or 2, **characterized** in that the cord has a diameter of 2.5 to 4.0 mm in an uncoated condition.

4. Method according to claim 3, **characterized** in that the cord has a diameter of 3.0 to 3.5 mm in an uncoated condition.

5. Method according to claim 3 or 4, **characterized** in that the cord consists of a cord manufactured of synthetic and/or organic plant fibres.

6. Method according to claim 5, **characterized** in that the cord is a polypropylene cord.

7. Method according to claim 5, **characterized** in that the cord is a polypropylene reinforced cord of cotton.

8. Method according to claim 5, **characterized** in that the cord is a cotton cord.

9. Method according to any of claims 1 to 8, **characterized** in that the cord coated with glue furthermore comprises an attractant addressed to the insect to be caught.

## Patentansprüche

1. Verfahren zum Fangen von Insekten unter Verwendung einer Kleberfalle, wobei man eine mit Kleber überzogene Schnur an einem Platz, wo Insekten gefangen werden sollen, anbringt, **dadurch gekennzeichnet,** daß man die Schnur horizontal anbringt.

2. Verfahren nach Anspruch 1, **dadurch gekennzeichnet,** daß man die mit Kleber überzogene Schnur in der Weise anordnet, daß man frische Schnur von einer Abgabeeinrichtung Stück für Stück abzieht.

3. Verfahren nach Anspruch 1 oder 2, **dadurch gekennzeichnet,** daß die Schnur einen Durchmesser von 2,5 bis 4,0 mm in unbeschichtetem Zustand hat.

4. Verfahren nach Anspruch 3, **dadurch gekennzeichnet,** daß die Schnur einen Durchmesser von 3,0 bis 3,5 mm in unbeschichtetem Zustand hat.

5. Verfahren nach Anspruch 3 oder 4, **dadurch gekennzeichnet,** daß die Schnur aus einer aus synthetischen Fasern und/oder organischen Pflanzenfasern hergestellten Schnur besteht.

6. Verfahren nach Anspruch 5, **dadurch gekennzeichnet,** daß die Schnur eine Polypropylenschnur ist.

7. Verfahren nach Anspruch 5, **dadurch gekennzeichnet,** daß die Schnur eine mit Polypropylen verstärkte Baumwollschnur ist.

8. Verfahren nach Anspruch 5, **dadurch gekennzeichnet,** daß die Schnur eine Baumwollschnur ist.

9. Verfahren nach einem der Ansprüche 1 bis 8, **dadurch gekennzeichnet,** daß die mit Kleber überzogene Schnur zusätzlich ein auf das zu fangende Insekt gerichtetes Anziehungsmittel umfaßt.

## Revendications

1. Procédé pour attraper des insectes utilisant un piège à colle, dans lequel on applique un ruban enduit de colle dans un endroit où les insectes doivent être attrapés, caractérisé en ce qu'on applique le ruban horizontalement.

2. Procédé suivant la revendication 1, caractérisé en ce qu'on dispose le ruban enduit de colle d'une manière telle qu'on fait avancer peu à peu un ruban frais à partir d'un distributeur.

3. Procédé suivant l'une ou l'autre des revendications 1 et 2, caractérisé en ce que le ruban a un diamètre de 2,5 à 4,0 mm à l'état non enduit.

4. Procédé suivant la revendication 3, caractérisé en ce que le ruban a un diamètre de 3,0 à 3,5 mm à l'état non enduit.

5. Procédé suivant l'une ou l'autre des revendications 3 et 4, caractérisé en ce que le ruban est constitué d'un ruban fabriqué à partir de fibres synthétiques et/ou végétales organiques.

6. Procédé suivant la revendication 5, caractérisé en ce que le ruban est un ruban de polypropylène.

7. Procédé suivant la revendication 5, caractérisé en ce que le ruban est un ruban de coton renforcé de polypropylène.

8. Procédé suivant la revendication 5, caractérisé en ce que le ruban est un ruban de coton.

9. Procédé suivant l'une quelconque des revendications 1 à 8, caractérisé en ce que le ruban enduit de colle comprend de plus un agent attractif servant à attraper les insectes.
